# EUROPEAN PATENT SPECIFICATION

(11) **EP 3 230 637 B1**
(45) Date of publication and mention of the grant of the patent: **05.02.2020**
(21) Application number: 15817037.3
(22) Date of filing: 10.12.2015
(51) Int. Cl.: F16L 19/10, C23C 8/04, C23C 8/26, C23C 8/50, C23C 8/80

(54) **MULTIPLE LAYER HARDNESS FERRULE AND METHOD**
KLEMMRING MIT MEHREREN SCHICHTHÄRTEN UND VERFAHREN
FERULE A COUCHES DE DURETE MULTIPLES ET PROCEDE

(30) Priority: 10.12.2014 US 201414565995
(43) Date of publication of application: 18.10.2017
(60) Divisional application: 19200212.9
(73) Proprietor: Parker-Hannifin Corporation, Cleveland, Ohio 44124-4141 (US)
(72) Inventor: GIBSON, James David, Huntsville, Alabama 35803 (US)
(74) Representative: Davies, Gregory Mark
(86) International application number: PCT/US2015/064958
(87) International publication number: WO 2016/094638

(56) References cited:
- EP-A2- 1 119 649
- WO-A1-00/09776
- WO-A1-2015/060551
- FR-A- 818 587
- KR-A- 20100 039 648
- KR-B1- 101 429 456
- US-A1- 2004 212 192
- US-A1- 2015 160 416

## Description

### TECHNICAL FIELD

The present invention relates generally to tube fittings, and more particularly to fittings of the ferruled variety.

### BACKGROUND

Stainless-steel compression tube fittings make it easy to install and maintain measurement and control instruments used in chemical processing, petrochemical plants, paper mills, and many other industrial settings. They can be used to seal a broad range of aggressive fluids and chemicals, and resist internal and external corrosion. The fittings grip and seal by compressing the nose of a ferrule into the outer diameter surface of the tubing. High-quality compression fittings hold internal pressure without leaks or failure until the tubing fails. And users can often repeatedly disassemble and reassemble them with no loss of sealing integrity.

The ferrule may appear rather simple, but actually highly engineered and, to function properly, usually requires considerable design, metallurgy, and production expertise. Not all products on the market meet these stringent requirements. For instance, the ferrule should properly deform elastically and plastically during fitting assembly to properly grip and seal the tubing. Its front edge usually must be harder than the tubing to grip and seal through surface scratches and defects, but if the entire ferrule is too hard, it may not deform properly. Therefore, only the gripping edge of the ferrule may be hardened while the rest may have different, tightly controlled mechanical properties. Also, the hardening process should not compromise stainless steel's corrosion resistance. And finally, production processes should consistently turn out defect-free ferrules that hold tight tolerances and maintain metallurgical specifications.

Ferrules have been machined from cold-drawn stainless-steel bar stock. Cold drawing strain hardens the metal and imparts mechanical strength throughout the ferrule. But the ferrule's front edge was often still not hard enough to seal against tube surface defects such as scratches, weld seams, ovality, and hardness variations, whereas the core hardness was too high to deform properly.

Conventional gas nitriding can be used to case harden the outer surface of the ferrule to a depth of approximately 0.102 mm (0.004 in). During assembly, the ferrule front edge shears into the tube. If disassembled, the ferrule remains tightly locked to the tubing, allowing remakes with consistent sealing integrity. However, gas nitriding (as well as carburization and carbonitriding) substantially lowers stainless steel's corrosion

Conventional nitriding and carburizing require high temperatures for the hardening constituents, nitrogen and carbon, to penetrate the passive oxide layer that makes stainless steel corrosion resistant. The high temperatures permit chromium, an anticorrosion alloying element, to diffuse through the metal and form chemically stable nitrides and carbides. These compounds give the surface layer most of its hardness, but in this chemically combined form chromium no longer resists corrosion, and the nitrided or carburized layer corrodes in many environments, including seawater and even moist air.

In addition, nitriding and carburizing can "sensitize" austenitic stainless steel exposed to high temperatures for an extended time. Carbon, which has low solubility in stainless steel, precipitates as chromium carbides in the grain boundaries, depleting regions adjacent to the grain boundaries of the chromium necessary for corrosion resistance. This process is known as sensitization.

Also known are hardening processes that do not reduce the corrosion resistance of stainless steel. These processes create a very hard (generally greater than 60 HRc) but very thin (generally 0.025 - 0.051 mm (0.001 - 0.002 inches) or less) ferrule outer skin. The skin allows for consistency in the penetration of a tube's outer surface by the ferrule, which can result in improved sealing and holding. These other processes do not require the high temperatures and long durations that permit chromium diffusion. This keeps chromium in solid solution as a corrosion-resistant alloying element. The hardened layer is continuous, free of defects and voids, as the process tends to fill surface inclusions and substantially reduce end-grain corrosion effects. One such process is the Suparcase® process performed by Parker-Hannifin Corporation.

These other processes also do not affect the bulk metal. There is no sensitization or change in mechanical strength beneath the hardened layer. The ductile layer deforms with the ferrule during assembly without cracking or spalling. In these processes, carbon and/or nitrogen supersaturates the hardened layer. Carbon/nitrogen atoms occupy interstitial sites in austenitic stainless steel's face-centered, cubic crystal lattice, strengthening the hardened layer. The hard crystal-lattice structure would like to expand to accommodate these atoms, but is constrained by the unhardened substrate. As a consequence, high compressive stress further enhances hardness. Compressive stress has the added benefits of substantially increasing a ferrule's fatigue and stress-corrosion resistance. In general terms, the process removes the passive oxide layer from the steel surface, letting carbon/nitrogen atoms diffuse directly into the metal lattice without traversing the passive layer barrier. These atoms diffuse at lower temperatures than other alloying elements, thus avoiding problems caused by formation of carbides and nitrides.

Mechanical properties of the ferrule should also be taken into account. An extremely hard ferrule may be too stiff during assembly and may not bow and properly grip the tubing. But if it is too soft, the underlying material may not support the case-hardened surface. The result can be an eggshell effect: the gripping front edge collapses during assembly and cannot hold the tubing under pressure. It can also reduce a beneficial arcing spring effect.

Cold working can be used to increase hardness and strength of Type 316 austenitic stainless steel after annealing. However, work-hardening rates change with the steel's composition, and constituent percentages can vary within an allowable range. Cold working can also reduce corrosion resistance.
US2015160416 discloses a ferrule and associated method characterized by an outer layer having a hardness; an intermediate layer below the outer layer, the intermediate layer having a hardness that is less than the hardness of the outer layer; and a core below the intermediate layer, the core having a hardness that is less than the hardness of the intermediate portion.
FR818587 discloses a sealing ring which has a thin hardened layer.
EP1119649 and WO00/09776 discloses a selectively case hardened steel article which is hardened by low temperature carburization and which includes a body made of a chromium bearing nickel or ferrous based alloy (for example, stainless steel), a first portion of the body having a first hardness characteristic, and a second portion of the body having a second hardness characteristic, the second portion being less than the entire body and substantially free of carbides.
US2004212192 discloses a tube fitting that uses only two components, namely a fitting body and a fitting nut. The nut and body are adapted to be threadably coupled together by relative rotation therebetween. The nut includes an integral tube gripping ring that cooperates with a camming surface on the body when the fitting is made-up.
KR20100039648 discloses a heat treatment method for salt bath carburization of stainless steel having high corrosion resistance to improve surface hardness and abrasion resistance of Fe-Cr-Ni based alloy and to prevent corrosion.
KR101429456 discloses a low temperature salt bath partial heat-treatment method.

### SUMMARY

The present invention provides a ferrule according to claim 1 and a method of forming a tube fitting ferrule according to claim 9. Optional features are recited in dependent claims.

The present invention provides a ferrule for a fitting that is characterized by at least three layers or regions having different hardnesses and strengths. In one embodiment, the ferrule has an outer shell, an intermediate layer, and a core. The outer layer can have corrosion-resistant properties, and may be very hard relative to the intermediate and core (e.g., a shell-like outer layer). The intermediate layer is below the outer layer. The thickness and hardness of the intermediate layer can vary according to the application or desired properties of the ferrule. The intermediate layer may have a hardness and strength between the very hard but thin outer layer and a soft (annealed) ferrule core.

Accordingly, the present invention includes a ferrule having an outer layer, a core, and an intermediate layer between the outer layer and the core. The intermediate layer has a hardness that is less than the hardness of the outer layer and greater than the hardness of the core. The outer layer has a thickness of about 0.025 - 0.051 mm (0.001 - 0.002 inches) and the intermediate layer has a thickness between 0.076 - 0.508 mm (0.003 - 0.020 inches), however, thicker intermediate layers are possible.

The thickness of the intermediate layer is equal or greater than 0.076, 0.102, 0.127, 0.152, ..., 0.483, 0.508, 0.533, ..., 1.27 mm (0.003, 0.004, 0.005, 0.006, ..., 0.019, 0.020, 0.021, ..., 0.050 inch).

According to another aspect, the invention includes a method of forming a ferrule from a base material that has a first hardness. The method including hardening an outer layer of the ferrule such that the outer layer has a hardness that is greater than the first hardness and hardening an intermediate layer of the ferrule beneath the outer layer such that the intermediate layer has a hardness that is less than hardness of the outer layer and greater than the hardness of the base material.

The foregoing and other features of the invention are hereinafter described in greater detail with reference to the accompanying drawings.

### BRIEF DESCRIPTION OF THE DRAWINGS

Embodiments of this invention will now be described in further detail with reference to the accompanying drawings, in which:
Figs. 1-4 are exemplary cross-sectional views of traditionally hardened ferrules;
Figs. 5-14 are exemplary cross-sectional views of various embodiments of ferrules having multiple layers of hardness in accordance with the invention. These figures and the description include also embodiments which are not covered by the claims. These are not embodiments of the invention, but aspects which are useful for understanding the invention. This applies in particular to ferrules without the outer or intermediate layer.

### DETAILED DESCRIPTION

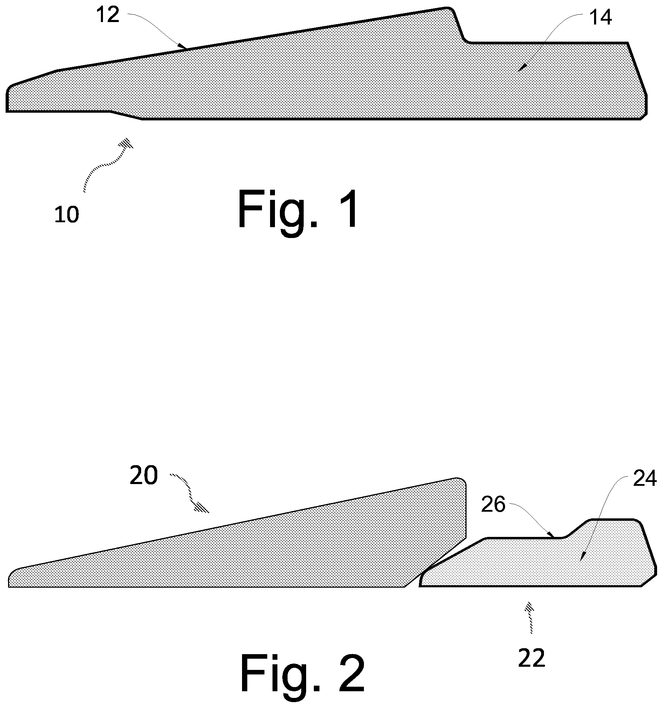

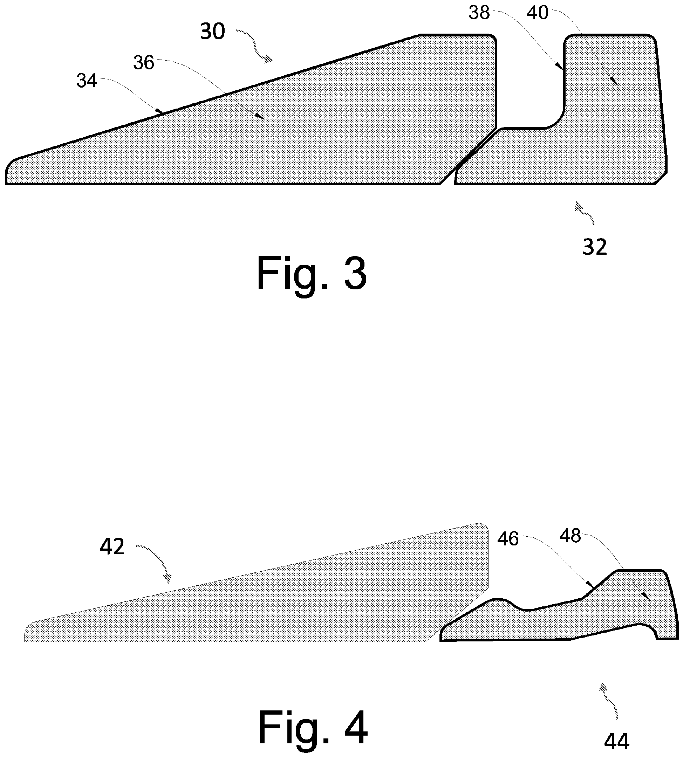

Figs. 1-4 are cross-sectional views of traditionally hardened ferrules. Fig. 1 shows a single ferrule, Fig. 2 shows a double ferrule assembly, Fig. 3 shows a higher pressure double ferrule assembly. Fig. 4 shows a modified double ferrule arrangement.

In Fig. 1, the single ferrule 10 has a hardened outer or skin layer 12 surrounding an inner core layer (or simply core) 14 that has a hardness less than that of the outer layer.

In Fig. 2, a double ferrule assembly includes a front ferrule 20 and a back ferrule 22. The back ferrule 22 has an outer layer 24 surrounding a core 26. Again, the outer layer has a hardness greater than that of the core.

In Fig. 3, a higher pressure double ferrule assembly includes a front ferrule 30 and a back ferrule 32. The front ferrule has a hardened outer layer 34 encasing a softer core 36, and the back ferrule likewise has a hardened outer layer 38 surrounding a softer core 40.

In Fig. 4, another double ferrule assembly includes a front ferrule 42 and a back ferrule 44. Only the back ferrule has a hardened outer layer 46 encasing a softer inner core 48.

General ferrule strength for austenitic materials depends on the base ferrule material strength and hardness. In the foregoing ferrules, the entire ferrule core generally has similar hardness. These ferrules can be made from materials of various levels of cold work and hardness (generally from about 85 HRb to 30 HRc or more in some instances) to match ferrule strength to the tube size and hardness. Use of higher strength ferrule core materials can result in more complicated geometry (especially larger sizes) to control ferrule action and assembly torque.

The outer layer has a thickness of about 0.025 - 0.051 mm (0.001 to 0.002 inches).

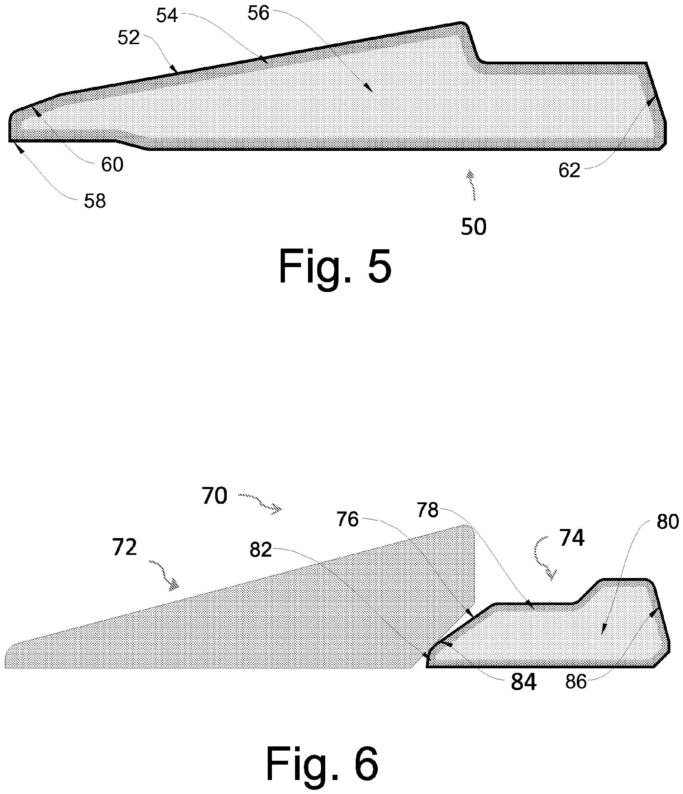

Referring to Fig. 5, an exemplary ferrule according to the present invention is indicated generally by reference numeral 50. The ferrule, and also the other ferrules herein described, may be used in a conventional manner in a tube fitting for securing a tube in the fitting by compressing around the tube.

The ferrule 50 comprises an outer layer 52, an intermediate layer 54 below the outer layer, and a core 56 beneath the intermediate layer. That is, the intermediate layer is disposed between the outer layer and the core. The intermediate layer may be provided at particular regions, such as at the leading (biting) front edge 58 of the inner diameter surface, at the leading portion 60 of wedge/camming surface, and/or the back side 62 of the ferrule.

The intermediate layer has a hardness that is less than the hardness of the outer layer, and the core has a hardness that is less than the hardness of the intermediate portion. In other words, the intermediate layer may have a hardness that is greater than the hardness of the core, and may be thicker than the outer layer. The core may be the softest of the layers, and may be the thickest of the layers.

Although only three layers are shown, it should be appreciated that the ferrule may have more than three layers of hardness, preferably going from hardest to softest going inwardly from the outer surface.

The outer layer has a thickness of about 0.025 - 0.051 mm (0.001 to about 0.002 inches). The intermediate layer has a thickness greater than the thickness of the outer layer, such as between 0.076 to 0.508 mm (0.003 to 0.020 inches). The core will typically be of much greater thickness than the intermediate layer.

The intermediate layer may be of relatively uniform hardness or may vary in hardness through its thickness.

The ferrule may be formed from a monolithic piece of material. The ferrule is treated to have multiple layers of hardness.

More particularly, the intermediate layer can vary in thickness from as thin as 0.076 mm (0.003 inches) for some sizes and applications to more than about 0.508 mm (0.020 inches) for other sizes and applications. The intermediate layer has an intermediate strength and hardness between the hard outer skin and the soft core.

In one embodiment, the hardness of the intermediate layer may be between about 95 HRb and about 35 HRc, however, variations outside of this range are possible, such as greater than 80 HRb and less than 40 HRc.

The outer layer may have a hardness equal or greater than 50 HRc, 60 HRc, 70 HRc, and higher.

The intermediate layer of hardness can be formed by any process that is capable of providing a corrosion resistant layer that can be varied considerably in thickness and is significantly stronger and harder than the soft core material. For example, the intermediate layer can be formed by a surface treatment process, such as a gas infusion process.

Typical surface hardening methods produce a layer of varying hardness (usually harder on the outside and softer further from the surface) and the layer or region is significantly harder than the core material. The hardness of the intermediate layer may vary according to the depth of the layer. For example, the area of the intermediate layer adjacent to the outer layer may be harder than the area of the intermediate layer that is adjacent to the core.

The intermediate layer may be strengthened by any of several solution nitriding processes dating back to at least the early 1990's (for example EP 0652300 A1) or the processes more recently described in US Published Application No. 2014/0048180. This patent discloses a process that can be used to infuse nitrogen to depth greater than 0.051 mm (0.002 inch) and as deep as 0.508 mm (0.020 inch), and even deeper, at a temperature that anneals the core. This infusion process strengthens the core material to form the intermediate layer. Initially, the monolithic piece of material can be cold worked. A related process that can be used is disclosed in International Application No. WO 2013/159781 A1.

A ferrule having multiple layers of hardness can provide several improvements/benefits over current designs. The combined strength of the outer layer and the intermediate layer can allow the ferrule to be configured to have an overall strength that matches or is appropriate for the particular characteristics (e.g., size, material strength) of the tube on which the ferrule is installed.

The thickness and/or hardness of the intermediate layer may be adjusted to provide additional support for the hard, relatively thin outer layer that is in contact with the tube. For example, a thicker and/or harder intermediate layer may be used for large diameter tube, heavy walled tube, or relatively hard tube. Customizing the outer layer and intermediate layer in this manner (e.g., so that it is configured for the tube on which the fitting is installed) can improve grip/seal of the ferrule on stronger and harder tube materials.

The intermediate layer and/or the adjustment of the thickness or hardness of the intermediate layer also can provide additional support at the ferrule bearing and sealing surfaces to better control of ferrule deformation and assembly torque. The intermediate layer and/or the adjustment of the thickness of the intermediate layer can also maintain a soft ferrule core, which can be beneficial for controlling ferrule deformation and assembly torque when pulling up a fitting.

The thickness and hardness of the intermediate layer can be increased or decreased based upon the desired effect.

The intermediate layer also can be a corrosion-resistant layer. The intermediate layer therefore can increase the overall corrosion resistance of the ferrule by providing a relatively thick layer of corrosion resistance. This can provide additional corrosion protection in sever service applications.

Additionally or alternatively, the intermediate layer can allow for the use of a soft/annealed core with additional corrosion benefits in applications like stress corrosion cracking where material hardness is often limited.

intermediate layer can be varied in thickness in the range of 0.003" to more than about 0.020" while maintaining an outer skin hardness greater than about 50 HRc. In particular, the thickness of the intermediate layer may be equal or greater than 0.076, 0.102, 0.127, 0.152, ..., 0.483, 0.508, 0.533, ..., 1.27 mm (0.003, 0.004, 0.005, 0.006, ..., 0.019, 0.020, 0.021, ..., 0.050 inch).

The ferrule may also include multiple intermediate layers having varying thicknesses in this range.

A ferrule having multiple hardness layers can be particularly applicable for ferrules made from austenitic materials, including but not limited to, 300 series stainless steels, Molybdenum enhanced alloys (e.g., 6Mo, etc.), Inconel, Hastelloy, etc. The multiple layer of hardness also can be used with other ferrule and material designs to form a ferrule that is layer hardened in a corrosion resistant manner. Some examples could include nickel alloys and copper nickel alloys.

Referring to Fig. 6, an assembly 70 of a front ferrule 72 and a rear ferrule 74 is shown. The rear ferrule 74 can have multiple layers of hardness, including a core 80, an intermediate layer 78 of a different hardness, and an outer layer 76 of another hardness, similar to the layers described above with respect to Fig. 5. The three layers can be provided at least at the front edge 82, the wedge/camming surface 84 and/or the back side 86.

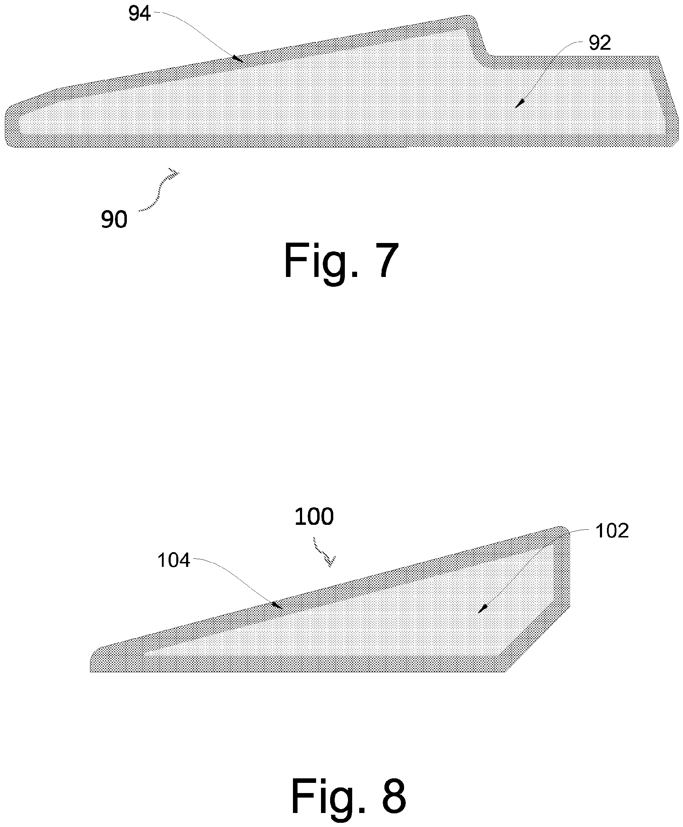

A thicker corrosion resistant layer may be used without the hard/thin outer layer to improve performance of ferrules not required to penetrate the outer tubing skin (compression ferrules, front ferrules and other alloy ferrules). An embodiment of this ferrule 90 is shown in Fig. 7. The ferrule 90 includes a core 92 and a single and harder corrosion resistant layer 94 which forms the outer surface of the ferrule. The core 92 can be a soft/annealed core and layer 94 may be a strong/thick, intermediate hardness outer surface for compressing and sealing against a tube. The layer 94 can be varied in thickness in the ranges above described in relation to the intermediate layers of the earlier embodiments. Benefits of such a design over a ferrule with a uniformly soft/annealed core include improved combination of ferrule flexibility and tube compression, increased ferrule strength, a soft core to maintain low assembly torque, and improved corrosion resistance, especially in stress corrosion cracking and similar applications.

Fig. 8 shows a front ferrule 100 of a two ferrule assembly that includes a core 102 and a single corrosion resistant layer 104 which forms the outer layer of the ferrule.

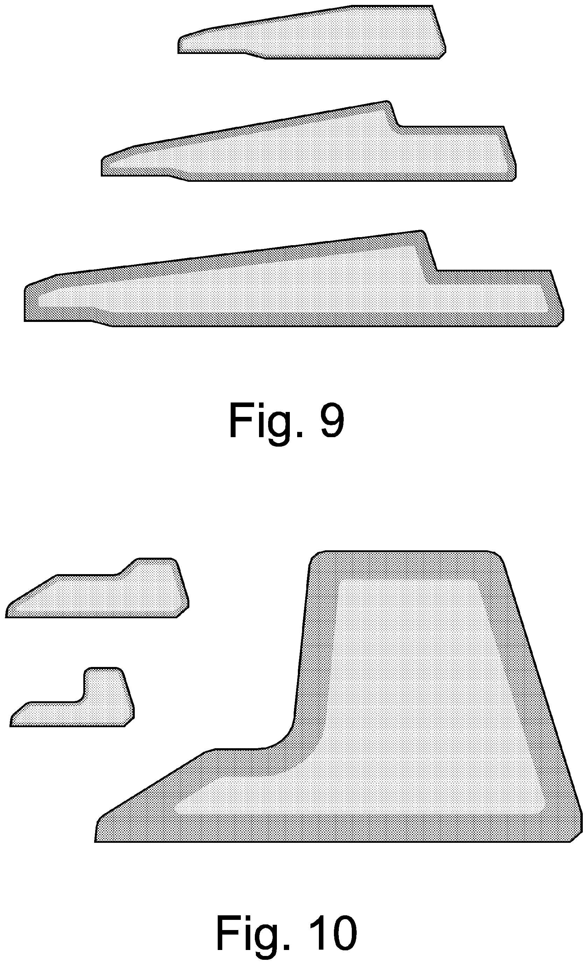

Fig. 9 show various geometries of single ferrules that have the previously described three layer construction.

Fig. 10 shows various embodiments of rear ferrules of a two ferrule fitting assembly. Each ferrule has a core, an intermediate layer of a hardness greater than the hardness of the core, and an outer layer of a hardness greater than the hardness of the intermediate layer. The range of thicknesses and hardnesses may be as previously described for the three layer construction.

Ferrules may also be selectively hardened. That is, an intermediate and/or hard/thin layer need not fully encase the core, but rather can be provided at selected regions of the ferrule.

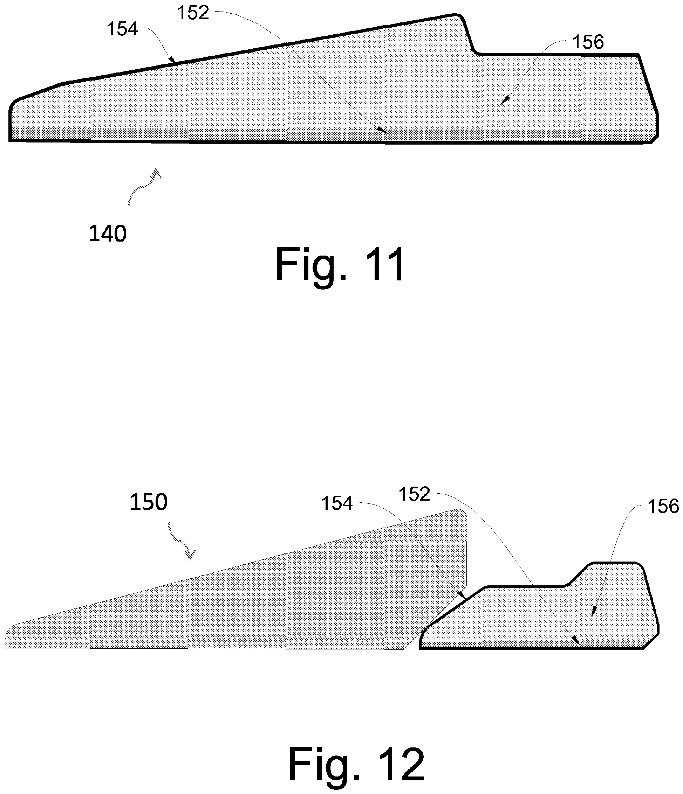

Figs. 11 and 12 show ferrules 140 and 150 that are selectively layered / strengthened by mechanical cold work at the inner diameter of the ferrule and then hardened all over. In particular, in the ferrules 140 and 150 an intermediate layer 152 can be provided only at the inner diameter of the ferrule between the harder and thinner outer layer 154 and the softer core 156, while rest of the ferrule is provided only with the outer layer and the softer core. This provides most of the additional strength in line with the ferrule holding the tube. The thicknesses and hardnesses of these layers can be as above described in relation to the other embodiments.

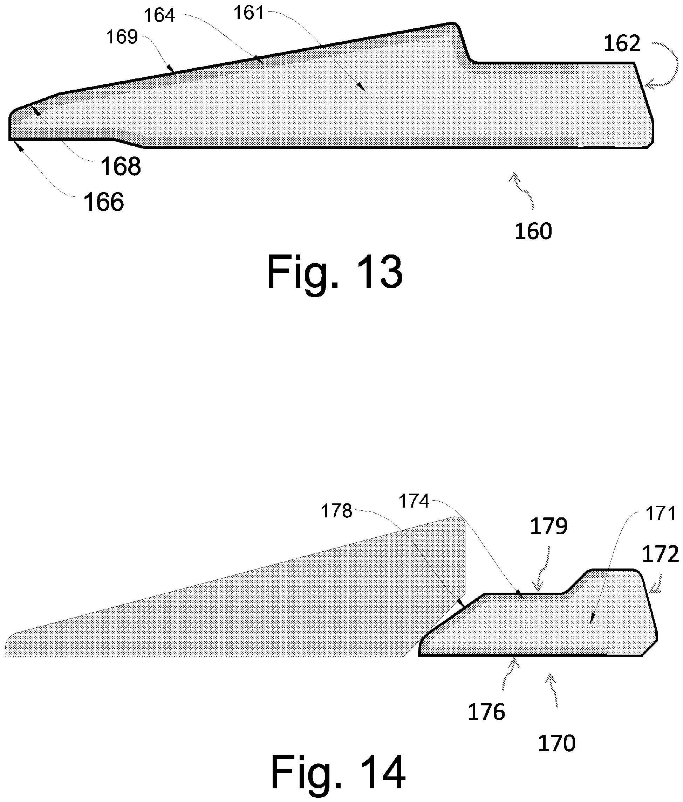

In addition, selective mechanical hardening can be done as an additional option to other multilayer hardened ferrules to provide more selective ferrule strength and increase tube holding and control torque. Figs. 13 and 14 show ferrules 160 and 170 selectively hardened, for example, by masking a portion of the ferrule core 161, 171, such as the back 162, 172 of the ferrule 160, 170 that will contact with the nut of the fitting assembly, so that the intermediate layer 164, 174 is not formed on the back region 162, 172 of the ferrule but formed elsewhere, in particular at the inner diameter surface 166, 176 and the wedge/camming surface 168, 178 of the ferrule. This also can be done by selectively plating/masking a portion of the ferrule at appropriate times to prevent the hardening processes from hardening the ferrule at the masked regions covered by the plating. The outer, very hard layer 169, 179 can also be selectively provided as desired.

As above discussed, the intermediate layer may be strengthened by any of several solution nitriding processes, In particular, a heat treatment for forming an austenitic intermediate layer with ≧ 0.30 wt. % of dissolved nitrogen in shaped parts made of steel, in particular stainless or ferritic steel, more particularly martensitic steel or stainless ferritic-austenitic steel or stainless ferritic-martensitic steel, is effected by nitriding at a temperature between 1000 and 1200 ° C in a nitrogen-containing gas atmosphere and subsequent cooling at a rate such that avoids nitrite excretion.

The intermediate layer may be hardened by subsequent re-heating to a temperature ≦ 650 °C.

The intermediate layer may also be strengthened by, using a method for formation of expanded austenite and/or expanded martensite, by solution hardening of a cold deformed workpiece of a passive alloy, which method comprises a first step of dissolving at least nitrogen in the workpiece at a temperature T1, which is higher than the solubility temperature for carbide and/or nitride and lower than the melting point of the passive alloy, and a subsequent second step of dissolving nitrogen and/or carbon in the workpiece at a temperature T2, which is lower than the temperature at which carbides and/or nitrides form in the passive alloy.

The first step of dissolving nitrogen in the workpiece at a temperature higher than the solubility temperature for nitride significantly improves the core strength of the passive alloy, such as stainless steel, in comparison to only re-crystallization annealing of the material prior to low temperature hardening.

The high temperature dissolution of nitrogen may be done at temperatures above the austenisation temperature of the alloy, e.g. at least or above 1050 °C and below the melting point of the alloy. The strengthening effect of this high-temperature nitriding is sufficient to compensate for the loss of strength caused by annealing the cold deformation while the workpiece is kept at the high temperature during nitriding. Furthermore, the high-temperature nitriding allows that low temperature hardening can be performed at higher temperatures than usual without creating problems with formation of nitrides and/or carbides, and that it is easier to activate the passive surface on the material at the subsequent low temperature surface hardening process. Thus, the formation of the hardened zone is accelerated. Furthermore, better corrosion characteristics are obtained, since nitrogen exists in solid solution.

A significant improvement of the hardening of passive alloys can be obtained by the high temperature dissolution of nitrogen followed by low temperature nitriding, carburising or nitrocarburising. Any passive alloy in which expanded austenite or expanded martensite may form is relevant, such as stainless steel, in particular cold deformed austenitic stainless steel.

The subsequent low temperature dissolution of nitrogen and/or carbon, which takes place at temperatures below the temperature at which carbides and/or nitrides form in the passive alloy, such as below 450-550 °C depend ent on the process, may in the subsequent second step be carried out on a material, which does not contain plastic deformation, but which has a strength on level with a plastically deformed workpiece. This means that the risk of sensitization is reduced significantly. The presence of nitrogen and optionally carbon in solid solution in stainless steel have even been found to give a faster low temperature process, than can be obtained using methods of the prior art, since the diffusion coefficients of nitrogen and carbon increase with increasing carbon/nitrogen content. Thus, in certain examples the passive alloy is a stainless steel containing nitrogen and/or carbon.

Thus it is possible to carry out a low temperature hardening of passive materials, and in particular stainless steel, of even strongly cold deformed components without occurrence of sensitization of the material and without loss of strength. Cold deformed material thus treated may even obtain a significantly better corrosion resistance than untreated material.

Dissolution at temperature T1 and at temperature T2 may be performed using any appropriate technology. For example, dissolution at temperature T1 and at temperature T2 may be performed in a gaseous process, e.g. using a gas containing nitrogen, such as ammonia, particularly N₂. Dissolution may also be performed using ion implantation, salt bath or plasma.

Dissolution at temperature T1 and temperature T2 may be carried out using gas, since this is a cheap and efficient solution and because all types of geometries may be treated uniformly, and there is a good temperature uniformity. Moreover, the use of a gas process means that the process is within the framework of the laws of thermodynamics, which means that there are very well controlled processing conditions.

The low temperature process may be carried out immediately after the high temperature process, but this is not mandatory.

It is also possible to perform the two processes with an offset in time and place.

If the processes are carried out immediately after each other, e.g. with a cooling step between the first and the second dissolution step, it is possible to avoid that a passivation of the surface occurs and hence activation prior to the low temperature process is superfluous. Thus, the dissolution at temperature T2 may take place immediately after cooling from temperature T1 without the passivation/activation of the surface in-between the execution of the high temperature process and the low temperature process.

This may be done in the same furnace.

When using gas the relevant gases containing nitrogen and/or carbon for use in the low temperature process may be supplied immediately when the material is cooled to temperature T2.

The cooling may be advantageously done using argon without any nitrogen present during cooling.

The method may further comprise an intermediate step of cooling the workpiece after the dissolution step at temperature T1 to a temperature which is lower than the temperature at which carbides and/or nitrides form in the passive alloy, and in a specific example of the invention dissolution at temperature T2 takes place immediately after cooling from dissolution at temperature T1 without the occurrence of a passivation of the surface.

By example, cooling after the first dissolution process at temperature T1 may take place especially quickly, e.g. in a period of no more than 60 second, in the temperature interval in which there is the largest tendency for sensitization and formation of precipitations, such as nitrides and/or carbides, for the relevant alloy. For stainless steel it has been found that this in particular takes place in the interval from 900 to 700 °C where the material should be cooled quickly.

In one embodiment the workpiece is cooled from 900 to 700 °C in less than 60 seconds.

In another embodiment the workpiece is cooled from 900 to 700 °C in less than 30 seconds. Thereby the formation of carbides and/or nitrides is substantially avoided, and this is an advantage since these can react with the alloying elements in stainless steel, such as chromium. The depletion of alloying elements from solid solution and binding of these as nitrides and/or carbides is suppressed and the corrosion resistance characteristics are maintained.

In a particular example the first dissolution step is performed in a gas, such as a gas containing N₂, e.g. substantially pure N₂ without other gasses than unavoidable impurities, and the cooling step may also be performed in a gas, which may be the same gas as that used in the first dissolution step.

The gas in the cooling step may be an inert gas not containing nitrogen (an nitrogen-free inert gas) such as argon. An "inert gas" is a gas that does not contain any substantial amount of molecules which interact with elements of the alloy; any inert gas not containing nitrogen is contemplated, or mixtures of gasses.

Cooling in an nitrogen-free inert gas may allow longer cooling times than 60 s, but cooling may be performed in a nitrogen-free inert gas in less than 30 s, such as in less than 10 s.

A method for solution hardening of a cold deformed workpiece of a passive alloy to form the intermediate layer, can comprise the steps of:

dissolving at least nitrogen in the workpiece at a temperature T1, which is higher than the austenisation temperature and lower than the melting point of the passive alloy, and

cooling the workpiece after the dissolution step to a temperature which is lower than the temperature at which carbides and/or nitrides form in the passive alloy, wherein the cooling step takes place in an inert gas not containing nitrogen.

## Claims

1. A ferrule (160) for a tube fitting, comprising:
an outer layer (169) having a hardness equal or greater than 40 HRc, the outer layer (169) having a thickness of about 0.025 to about 0.051 mm (about 0.001 to about 0.002 inches);
an intermediate layer (164) below the outer layer (169), the intermediate layer (164) having a hardness that is less than the hardness of the outer layer (169) and in the range of 80 HRb to 40 HRc, and the intermediate layer (164) having a thickness equal or greater than 0.076 mm (0.003 inches), wherein the intermediate layer (164) is formed by nitrogen infusion;
a core (161) below the intermediate layer (164), the core (161) having a hardness that is less than the hardness of the intermediate layer (164).

2. The ferrule (160) of claim 1, wherein the intermediate layer (164) has a thickness between 0.076 to 0.508 mm (0.003 to 0.020 inches).

3. The ferrule (160) of any preceding claim, wherein the intermediate layer (164) includes varying levels of hardness.

4. The ferrule (160) of any preceding claim, wherein the ferrule (160) is made of an austenitic material.

5. The ferrule (160) of any preceding claim, wherein the thickness of the intermediate layer (164) is equal or greater than 0.102, 0.127, 0.152, ..., 0.483, 0.508, 0.533, ..., 1.27 mm (0.004, 0.005, 0.006, ..., 0.019, 0.020, 0.021, ..., 0.050 inch).

6. The ferrule (160) of any preceding claim, wherein the outer layer (169) has a hardness equal or greater than 50 HRc, 60 HRc, 70 HRc, and higher.

7. The ferrule (160) of any preceding claim, wherein the intermediate layer (164) has a hardness in the range of 95 HRb to 35 HRc.

8. The ferrule (160) of any preceding claim, wherein the intermediate layer (164) and/or outer layer (169) are not provided at some regions of the outer surface of the ferrule (160).

9. A method of forming a tube fitting ferrule (160) from a base material that has a first hardness comprising:
hardening an outer layer (169) of the ferrule (160) such that the outer layer (169) has a hardness that is greater than the first hardness, wherein the hardness of the outer layer (169) is equal or greater than 40 HRc, and the outer layer (169) has a thickness of about 0.025 to about 0.051 mm (about 0.001 to about 0.002 inches);
hardening an intermediate layer (164) of the ferrule (160) beneath the outer layer (169) such that the intermediate layer (164) has a hardness that is less than hardness of the outer layer (169) and greater than the hardness of the base material and in the range of 80 HRb to 40 HRc, and the intermediate layer (164) having a thickness equal or greater than 0.076 mm (0.003 inches), optionally the base material is an austenitic material,
wherein the intermediate layer (164) is hardened by nitrogen infusion.

10. The method of claim 9, wherein the outer layer (169) and/or intermediate layer (164) are formed at selected regions of the ferrule.

11. The method of any one of claims 9 to 10 or the ferrule of any one of claims 1 to 8, wherein the intermediate layer (164) or a core (161) is hardened by dissolving at least nitrogen in the workpiece at a temperature T1, which is higher than the austenisation temperature and lower than the melting point of the passive alloy, and cooling the workpiece after the dissolution step to a temperature which is lower than the temperature at which carbides or nitrides form in the passive alloy, wherein the cooling step preferably takes place in an inert gas not containing nitrogen.

## Patentansprüche

1. Hülse (160) für eine Schlauch- oder Rohrverbindung, umfassend:
eine Außenschicht (169) mit einer Härte von gleich oder größer als 40 HRc, wobei die Außenschicht (169) eine Dicke von ungefähr 0,025 bis ungefähr 0,051 mm (ungefähr 0,001 bis ungefähr 0,002 Inch) aufweist;
eine Zwischenschicht (164) unterhalb der Außenschicht (169), wobei die Zwischenschicht (164) eine Härte aufweist, die geringer als die Härte der Außenschicht (169) ist und im Bereich von 80 HRb bis 40 HRc liegt, und wobei die Zwischenschicht (164) eine Dicke von gleich oder größer als 0,076 mm (0,003 Inch) aufweist, wobei die Zwischenschicht (164) durch Stickstoffinfusion ausgebildet ist;
einen Kern (161) unterhalb der Zwischenschicht (164), wobei der Kern (161) eine Härte aufweist, die geringer als die Härte der Zwischenschicht (164) ist.

2. Hülse (160) nach Anspruch 1, wobei die Zwischenschicht (164) eine Dicke zwischen 0,076 und 0,508 mm (0,003 bis 0,020 Inch) aufweist.

3. Hülse (160) nach einem der vorhergehenden Ansprüche, wobei die Zwischenschicht (164) variierende Härtegrade beinhaltet.

4. Hülse (160) nach einem der vorhergehenden Ansprüche, wobei die Hülse (160) aus einem austenitischen Material hergestellt ist.

5. Hülse (160) nach einem der vorhergehenden Ansprüche, wobei die Dicke der Zwischenschicht (164) gleich oder größer als 0,102, 0,127, 0,152, ..., 0,483, 0,508, 0,533, ..., 1,27 mm (0,004, 0,005, 0,006, ..., 0,019, 0,020, 0,021, ..., 0,050 Inch) ist.

6. Hülse (160) nach einem der vorhergehenden Ansprüche, wobei die Außenschicht (169) eine Härte von gleich oder größer als 50 HRc, 60 HRc, 70 HRc und höher aufweist.

7. Hülse (160) nach einem der vorhergehenden Ansprüche, wobei die Zwischenschicht (164) eine Härte im Bereich von 95 HRb bis 35 HRc aufweist.

8. Hülse (160) nach einem der vorhergehenden Ansprüche, wobei die Zwischenschicht (164) und/oder Außenschicht (169) an einigen Bereichen der Außenfläche der Hülse (160) nicht vorgesehen sind.

9. Verfahren zum Ausbilden einer Schlauch- oder Rohrverbindungshülse (160) aus einem Basismaterial, das eine erste Härte aufweist, umfassend:
Härten einer Außenschicht (169) der Hülse (160), sodass die Außenschicht (169) eine Härte aufweist, die größer als die erste Härte ist, wobei die Härte der Außenschicht (169) gleich oder größer als 40 HRc ist und die Außenschicht (169) eine Dicke von ungefähr 0,025 bis ungefähr 0,051 mm (ungefähr 0,001 bis ungefähr 0,002 Inch) aufweist;
Härten einer Zwischenschicht (164) der Hülse (160) unterhalb der Außenschicht (169), sodass die Zwischenschicht (164) eine Härte aufweist, die geringer als die Härte der Außenschicht (169) und größer als die Härte des Basismaterials ist und im Bereich von 80 HRb bis 40 HRc liegt, und wobei die Zwischenschicht (164) eine Dicke von gleich oder größer als 0,076 mm (0,003 Inch) aufweist, wobei das Basismaterial optional ein austenitisches Material ist,
wobei die Zwischenschicht (164) durch Stickstoffinfusion gehärtet wird.

10. Verfahren nach Anspruch 9, wobei die Außenschicht (169) und/oder Zwischenschicht (164) an ausgewählten Bereichen der Hülse ausgebildet werden.

11. Verfahren nach einem der Ansprüche 9 oder 10 oder Hülse nach einem der Ansprüche 1 bis 8, wobei die Zwischenschicht (164) oder ein Kern (161) durch Lösen von zumindest Stickstoff im Werkstück bei einer Temperatur T1, die höher als die Austenisierungstemperatur und niedriger als der Schmelzpunkt der passiven Legierung ist, und Kühlen des Werkstücks nach dem Lösungsschritt auf eine Temperatur, die niedriger als die Temperatur ist, bei der sich Karbide oder Nitride in der passiven Legierung bilden, gehärtet wird, wobei der Kühlschritt vorzugsweise in einem Inertgas stattfindet, das keinen Stickstoff enthält.

## Revendications

1. Virole (160) pour un raccord de tuyauterie, comprenant :
une couche externe (169) ayant une dureté supérieure ou égale à 40 HRc, la couche externe (169) ayant une épaisseur d'environ 0,025 à environ 0,051 mm (environ 0,001 à environ 0,002 pouce) ;
une couche intermédiaire (164) située au-dessous de la couche externe (169), la couche intermédiaire (164) ayant une dureté qui est inférieure à la dureté de la couche externe (169) et comprise dans la plage allant de 80 HRb à 40 HRc, et la couche intermédiaire (164) ayant une épaisseur supérieure ou égale à 0,076 mm (0,003 pouce), où la couche intermédiaire (164) est formée par injection d'azote ;
un noyau (161) situé en dessous de la couche intermédiaire (164), le noyau (161) ayant une dureté qui est inférieure à la dureté de la couche intermédiaire (164).

2. Virole (160) de la revendication 1, dans laquelle la couche intermédiaire (164) a une épaisseur comprise entre 0,076 et 0,508 mm (0,003 à 0,020 pouce).

3. Virole (160) de l'une des revendications précédentes, dans laquelle la couche intermédiaire (164) comporte des niveaux de dureté variables.

4. Virole (160) de l'une des revendications précédentes, dans laquelle la virole (160) est réalisée en un matériau austénitique.

5. Virole (160) de l'une des revendications précédentes, dans laquelle l'épaisseur de la couche intermédiaire (164) est supérieure ou égale à 0,102, 0,127, 0,152, ..., 0,483, 0,508, 0,533, ..., 1,27 mm (0,004, 0,005, 0,006, ..., 0,019, 0,020, 0,021, ..., 0,050 pouce).

6. Virole (160) de l'une des revendications précédentes, dans laquelle la couche externe (169) a une dureté supérieure ou égale à 50 HRc, 60 HRc, 70 HRc, et plus.

7. Virole (160) de l'une des revendications précédentes, dans laquelle la couche intermédiaire (164) a une dureté comprise dans la plage allant de 95 HRb à 35 HRc.

8. Virole (160) de l'une des revendications précédentes, dans laquelle la couche intermédiaire (164) et/ou la couche externe (169) ne sont pas prévues au niveau de certaines régions de la surface externe de la virole (160).

9. Procédé de formation d'une virole de raccord de tuyauterie (160) à partir d'un matériau de base qui a une première dureté, comprenant le fait :
de durcir une couche externe (169) de la virole (160) de sorte que la couche externe (169) ait une dureté qui est supérieure à la première dureté, où la dureté de la couche externe (169) est supérieure ou égale à 40 HRc, et la couche externe (169) a une épaisseur d'environ 0,025 à environ 0,051 mm (environ 0,001 à environ 0,002 pouce) ;
de durcir une couche intermédiaire (164) de la virole (160) sous la couche externe (169) de sorte que la couche intermédiaire (164) ait une dureté qui est inférieure à la dureté de la couche externe (169) et supérieure à la dureté du matériau de base et dans la plage allant de 80 HRb à 40 HRc, et la couche intermédiaire (164) ayant une épaisseur supérieure ou égale à 0,076 mm (0,003 pouce), le matériau de base est éventuellement un matériau austénitique,
dans lequel la couche intermédiaire (164) est durcie par injection d'azote.

10. Procédé de la revendication 9, dans lequel la couche externe (169) et/ou la couche intermédiaire (164) sont formées au niveau des régions sélectionnées de la virole.

11. Procédé de l'une quelconque des revendications 9 et 10 ou virole de l'une quelconque des revendications 1 à 8, où la couche intermédiaire (164) ou un noyau (161) est durci(e) par dissolution d'au moins l'azote dans la pièce à usiner à une température T1, qui est supérieure à la température d'austénisation et inférieure au point de fusion de l'alliage passif, et par refroidissement de la pièce à usiner après l'étape de dissolution à une température qui est inférieure à la température permettant la formation de carbures ou de nitrures dans l'alliage passif, où l'étape de refroidissement se produit de préférence dans un gaz inerte ne contenant pas d'azote.
